# EUROPEAN PATENT APPLICATION

(11) **EP 4 289 738 A1**
(43) Date of publication of application: **13.12.2023**
(21) Application number: 23178082.6
(22) Date of filing: 07.06.2023
(51) Int. Cl.: B64D 11/00, B64D 13/06, B64D 11/04, B64D 11/06

(54) **ADVANCED CONTROL FOR PROGNOSTICS AND HEALTH MANAGEMENT (PHM) FOR MICRO-CHILLER SYSTEMS WITH THERMO-ELECTRIC ELEMENTS**

(30) Priority: 08.06.2022 US 202263350352 P; 24.01.2023 US 202318100985
(71) Applicant: B/E Aerospace, Inc., Winston-Salem, NC 27105 (US)
(72) Inventor: PEARSON, Matthew R., Hartford (US); EDQUIST, John D., Milwaukee (US)
(74) Representative: Dehns

(57) **Abstract**

A controller assembly, apparatus, and method of manufacture for a micro-chiller unit is provided. The control assembly includes a controller (450,600) coupled to a plurality of sensors (400) configured within a micro-chiller unit wherein the controller (450,600) is configured to receive sensed data from at least one sensor of the plurality of sensors (400) comprising at least temperature data of an interior cavity disposed in the micro-chiller unit, wherein in response to receiving at least temperature data, the controller (450,600) is configured to adjust an amount of power to the micro-chiller unit in accordance with a maximum level of power from a supply locally available, wherein the amount of power is further adjusted in accordance with a mode of operation of the micro-chiller unit for supplying current to at least a set of thermo-electric elements to cool the interior cavity of the micro-chiller unit to a set-point temperature.

## Description

### CROSS-REFERENCE TO RELATED APPLICATIONS

This application claims benefit of priority under 35 U.S.C. 120 to U.S. Provisional Application Ser. No. 63/350,352 entitled "HIGH EFFICIENCY MICRO-CHILLER UNIT," filed on June 8, 2022, the entire contents of which are incorporated by reference.

### FIELD

The present disclosure generally relates to cooling enclosures within an aircraft, and more specifically to assembly, apparatus, and a method of manufacture of a controller for temperature control and for Prognostic and Health Management (PHM) for a micro-chiller system configured for enclosures within, for example, an in-seat passenger or galley compartment onboard an aircraft.

### BACKGROUND

Premium class passengers that include first class and business are generally considered the most profitable passenger segment for carriers, and therefore carriers' desire to provide the premium class passengers with the highest comfort and service. This includes extending the class of service to not only commonly considered options such as passenger seating and space, but also to other services provided including providing chilled refreshments in a mini bar in the aircraft galley or in an in-seat passenger seating compartment. It has not been feasible to station compact refrigeration compartments in an aircraft mini-bar, galley monument, seat station or other smaller enclosures in the aircraft interior.

### SUMMARY

According to a first aspect of this disclosure, a control assembly is provided. The control assembly includes a controller; and a plurality of sensors configured within a micro-chiller unit and coupled to the controller wherein the controller is configured to receive sensed data from at least one sensor of the plurality of sensors comprising at least temperature data of an interior cavity disposed in the micro-chiller unit; wherein in response to receiving the temperature data, the controller is configured to adjust an amount of power to the micro-chiller unit in accordance with a maximum level of power from a supply locally available in an aircraft for the micro-chiller unit; wherein the amount of power is further adjusted in accordance with a selective mode of operation of the micro-chiller unit for supplying current to a set of components of the micro-chiller unit comprising at least a set of thermo-electric elements to cool the interior cavity of the micro-chiller unit to a set-point temperature.

In various embodiments, the controller is configured to adjust a level of current supplied to the set of thermo-electric elements for conductive cooling of the interior cavity wherein the conductive cooling is associated with a cold side temperature computed from the set of thermo-electric elements based on a conversion of a temperature characteristic associated with performance of the set of thermo-electric elements.

In various embodiments, in response to sensed data received by the controller of at least an internal temperature of the interior cavity wherein the internal temperature is determined greater than a threshold temperature configured for touch operation, the controller is configured to cease operation of the micro-chiller unit.

In various embodiments, the set of components comprises a heat-sink and wherein in response to sensed data of temperature associated with operation of the heat-sink that is determined greater than the threshold temperature for operating a heat sink, the controller is configured to cease operation of the micro-chiller unit.

In various embodiments, the set of components comprises a fan and wherein in response to sensed data of operation of a fan motor determined greater than a threshold for operating the fan motor, the controller is configured to cease operation of the micro-chiller unit.

In various embodiments, the controller is configured to record sensed data received from at least one sensor of the plurality of sensor wherein the sensed data comprises one or more temperatures associated with performance of the set of thermo-electric elements disposed in the micro-chiller unit.

In various embodiments, the controller is configured to monitor changes associated with operating time of the micro-chiller unit wherein the operating time comprises at least a pull-down time for cooling the interior cavity to the set-point temperature.

In various embodiments, the controller is configured to monitor changes in at least regulating of a steady-state temperature during operation of the micro-chiller unit.

In various embodiments, the controller is configured to monitor a rate of change of temperature, to determine if an increase of temperature will result in an operating temperature of the micro-chiller unit exceeding a maximum operating temperature configured for the micro-chiller unit, and to generate a notification of prior to the operating temperature exceeding the maximum threshold operating temperature.

According to another aspect of this disclosure, an apparatus is provided. The apparatus includes at least one sensor; and a controller; wherein the controller is housed within a micro-chiller unit and configured to generate diagnostic information about operations of the micro-chiller unit from at least sensed data received from the at least one sensor; wherein in response to receiving sensor data comprising a plurality of temperatures associated with operations of thermo-electric elements of the micro-chiller unit from the at least one sensor, the controller is configured to adjust an amount of power to thermo-electric elements to cause an efficient cooling process based on computations of performance associated with a characteristic of the thermo-electric elements to cool an interior cavity housed within the micro-chiller unit to a set-point temperature.

In various embodiments, the controller is configured to adjust a level of current supplied to the thermo-electric elements for conductive cooling of the interior cavity wherein the conductive cooling is associated with a cold side temperature computed from the thermo-electric elements based on a conversion of the characteristic associated with performance of the thermo-electric elements.

In various embodiments, in response to sensed data received by the controller of at least an internal temperature of the interior cavity wherein the internal temperature is determined greater than a threshold temperature configured for a touch operation, the controller is configured to cease operation of the micro-chiller unit.

In various embodiments, a heat-sink housed within the micro-chiller unit and in response to sensed data of temperature associated with operation of the heat-sink that is determined greater than the threshold temperature for operating a heat sink, the controller is configured to cease operation of the micro-chiller unit.

In various embodiments, a fan housed within the micro-chiller unit and in response to sensed data of operation of a fan motor determined greater than a threshold for operating the fan motor, the controller is configured to cease operation of the micro-chiller unit.

In various embodiments, the controller is configured to record sensed data received from at least one sensor wherein the sensed data comprises one or more temperatures associated with performance of thermo-electric elements disposed in the micro-chiller unit.

In various embodiments, the controller is configured to monitor changes associated with operating time of the micro-chiller unit wherein the operating time comprises at least a pull-down time for cooling the interior cavity to the set-point temperature.

In various embodiments, the controller is configured to monitor changes in at least regulating of a steady-state temperature during operation of the micro-chiller unit.

In various embodiments, the controller is configured to monitor a rate of change of temperature, to determine if an increase of temperature will result in an operating temperature of the micro-chiller unit exceeding a maximum operating temperature configured for the micro-chiller unit, and to generate a notification of prior to the operating temperature exceeding the maximum threshold operating temperature.

According to yet another aspect of this disclosure, a method to manufacture a controller apparatus is provided. The method includes constructing a micro-chiller unit with a housing to conform to a monument of an aircraft seating module; disposing the micro-chiller unit with a set of thermo-electric elements in the housing for conductive cooling of an interior cavity wherein the micro-chiller unit is mounted on a conductive rear plate that forms a wall of the interior cavity; disposing a controller within the housing and coupled to a plurality of sensors wherein the controller is configured to receive sensed data from at least one sensor of the plurality of sensors comprising at least temperature data of the interior cavity; wherein in response to receiving the temperature data, the controller is configured to adjust an amount of power to the micro-chiller unit in accordance with a maximum level of power from a supply locally available in an aircraft; wherein the amount of power is further adjusted in accordance with a selective mode of operation of the micro-chiller unit for supplying current to at least the set of thermo-electric elements for the conductive cooling of the interior cavity of the micro-chiller unit to a set-point temperature.

In various embodiments, the controller is configured to adjust a level of current supplied to the set of thermo-electric elements for conductive cooling of the interior cavity wherein the conductive cooling is associated with a cold side temperature computed from the set of thermo-electric elements based on a conversion of a temperature characteristic associated with cooling performance of the set of thermo-electric elements.

The foregoing features and elements may be combined in any combination, without exclusivity, unless expressly indicated herein otherwise. These features and elements as well as the operation of the disclosed embodiments will become more apparent in light of the following description and accompanying drawings.

### BRIEF DESCRIPTION OF THE DRAWINGS

The subject matter of the present disclosure is particularly pointed out and distinctly claimed in the concluding portion of the specification. A more complete understanding of the present disclosure, however, may best be obtained by referring to the following detailed description and claims in connection with the following drawings. While the drawings illustrate various embodiments employing the principles described herein, the drawings do not limit the scope of the claims.
FIG. 1A, 1B, and 1C illustrates an in-seat mini-bar module that includes a micro-chiller unit configured to fit in a compartment/monument in a passenger seating module in accordance with various embodiments.
FIGS. 2A, 2B, 2C, and 2D illustrate components of the in-seat mini-bar module that includes the micro-chiller unit of FIGS 1A-C in accordance with various embodiments.
FIGS. 3A and 3B illustrate perspectives of the components that make up the assembly of the micro-chiller unit of the in-seat mini-bar module attached to the rear of the in-seat mini-bar module in accordance with various embodiments.
FIGS. 4A and 4B illustrate diagrams of a set of sensors and a controller of the micro-chiller unit of FIGS 1A-C, in accordance with various embodiments.
FIG. 5A illustrates an example algorithm of controller operations in a plurality of modes based on the internal temperature of the micro-chiller unit, in accordance with various embodiments.
FIG. 5B illustrates a diagram of a plurality of cases of operation of the controller for chilling the interior cavity of the micro-chiller unit, in accordance with various embodiments.
FIG. 5C illustrates a plurality of cases of operation of the controller for efficient operation of the micro-chiller unit, in accordance with various embodiments.
FIG. 5D illustrates a plurality of cases of the Prognostics and Health Management (PHM) processes configured with the controller of the micro-chiller unit, in accordance with various embodiments.
FIG. 5E illustrates a diagram related to configuring of settings for an available power and set point temperature for the controller operations for the micro-chiller unit in accordance with various embodiments.
FIG. 6 illustrates a diagram of an architecture of a controller, which monitors and controls the temperature and operation in the dynamic chilled micro-chiller unit in accordance with various embodiments.
FIG. 7 illustrates a flow diagram for configuring a control assembly of the controller and components of a micro-chiller unit of the aircraft in accordance with various embodiments.

### DETAILED DESCRIPTION

The following detailed description of various embodiments herein makes reference to the accompanying drawings, which show various embodiments by way of illustration. While these various embodiments are described in sufficient detail to enable those skilled in the art to practice the disclosure, it should be understood that other embodiments may be realized and that changes may be made without departing from the scope of the disclosure. Thus, the detailed description herein is presented for purposes of illustration only and not of limitation. Furthermore, any reference to singular includes plural embodiments, and any reference to more than one component or step may include a singular embodiment or step. Also, any reference to attached, fixed, connected, or the like may include permanent, removable, temporary, partial, full or any other possible attachment option. Additionally, any reference to without contact (or similar phrases) may also include reduced contact or minimal contact. It should also be understood that unless specifically stated otherwise, references to "a," "an" or "the" may include one or more than one and that reference to an item in the singular may also include the item in the plural. Further, all ranges may include upper and lower values and all ranges and ratio limits disclosed herein may be combined.

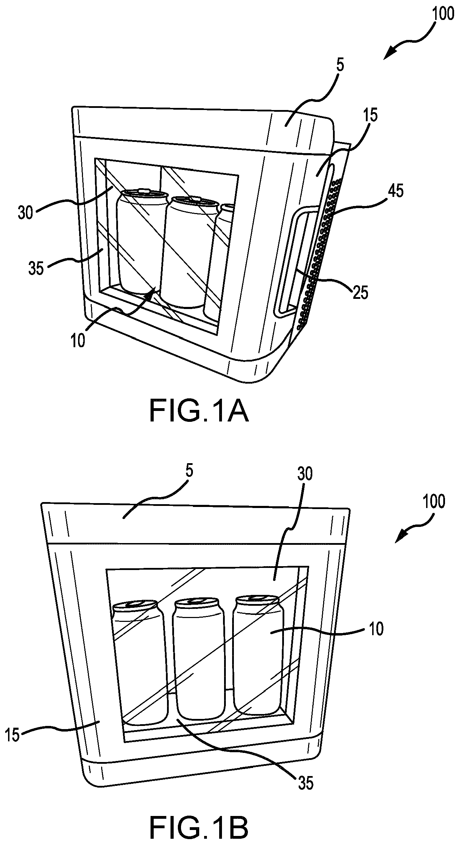

Referring to FIG. 1A, FIG. 1A illustrates an in-seat mini-bar module that includes a micro-chiller unit configured to fit in a compartment/monument in a passenger seating module in accordance with various embodiments. The in-seat mini-bar module 100 includes a micro-chiller enclosure system housed in an exterior housing 5 with an interior compartment 30 (container or interior cavity), a door 15, rear assembly 45 (with exterior venting), and a latching mechanism 25. The example in-seat mini-bar module 100 is a standalone module configured to seamlessly integrate into a monument or compartment configured in a seating module of an aircraft.

In various embodiments, the latching mechanism 25 can fasten the door to the exterior housing 5 to hold the door with a clasping action and can be opened with a one-handed manual operation that unlatches the door 15 from the exterior housing 5 by a pull action on a handle configured within the latching mechanism 25. In various embodiments, the passenger can pull the handle (integrated in the latching mechanism 25) and the door 15 would unlatch from the exterior housing 5 and open. In various embodiments, the latching mechanism 25 can enable a springloaded action of the door 15 to open the door 15, to enable reaching (via a one-hand operation) into the interior cavity upon the unlatching action of the latching mechanism 25 from the exterior housing 5. In this way, it may not be necessary to perform a two-step process of manually opening the door and holding it open, and then reaching into the interior cavity for retrieving a beverage as the door 15 opens in one action for convenience upon the unlatching action. This operation follows other compartments such as the baggage compartments above the passenger seating module that open upon the unlatching action of the locking mechanism. Next, upon closure, to keep the door closed, a force is applied to actuate the latch operation to latch the door to the exterior housing 5. In this way, the door 15 is latched shut when the door is closed and latched. If the door is shut and the mechanism is not latched, then the door will open so notice is provided that the door has not been properly closed. In various embodiments, a sensor or other notification may be configured to notify the passenger or other user that the door 15 has not be closed properly.

The door 15 can be configured to include a transparent insert (i.e., insert 10) that may be composed of a plexiglass material (e.g., polycarbonate) that has insulative properties. The insert 10 may also be composed of other non-opaque material, or semi-opaque material, or configured in glass. The insert 10 provides a window in the door 15 so the passenger can view the contents stored in the in-seat mini-bar module 100. In various embodiments, the insert can be constructed with more opaqueness and have a layering of a non-reflective or tinted film for an aesthetic covering of the exterior housing. This may also enable improvements in the thermal management of the cavity temperature caused by light exposure. In various embodiments, the door 15 attached to the exterior housing 5 is made of a combination of insulative material with a see-through insulated double-glazed polycarbonate insert (i.e., insert 10) that enables a convenient viewing of products stored in the interior compartment 30 of the exterior housing 5 without the need to open the latching mechanism 25 and door 15 to expose the interior contents. In various embodiments, at least one side of the in-seat mini-bar module 100 (excluding the door that incorporates a glass or other non-opaque material) are lined with insulation and may also include an optional cosmetic face sheet (e.g., stainless steel fascia) for aesthetics and protection. In various embodiments, the additional layer of insulation may reduce operational noise of the micro-chiller unit for passenger comfort as the in-seat mini-bar module 100 is placed close to the seated location of the passenger.

FIG. 1B illustrates another perspective of the in-seat mini-bar module 100 in which multiple canned refreshments are stored in accordance with various embodiments. The in-seat mini-bar module 100 can be configured with a shelf 35 that allows for storing and holding of multiple canned beverages. Even though FIG. 1B illustrates the storage of 12 fl. oz. (355mL) cans in the interior of the in-seat mini-bar module 100, it is contemplated that the in-seat mini-bar module 100 dimensions can be changed to accommodate different size beverage canisters including bottles and cartons. In various embodiments, the interior cavity of the compartment 30 and shelf can be configured to support larger bottles, milk cartons, wine bottles, and other items. In various embodiments, sensors may be integrated into the shelf to notify flight crew when a canister is empty or removed.

In various embodiments, the internal volume of the enclosed space of the compartment 30 is configured in dimensions of approximately or in the range of 8 inches (20.3 cm) in height, 9 inches (22.86 cm) in width and 3.00 (7.62 cm) inches depth. In various embodiments, the compartment 30 (interior space) of the micro-chiller unit in the exterior housing 5 can store about 3 12 fluid-ounce (355-millimeter) cans of beverages (ex., soda can about 2.6 inches (6.6 cm) in diameter and 4.83 inches (12.3 cm) in height). It is contemplated, that the exterior housing 5 for the in-seat mini-bar module 100 can be configured in a variety of sizes and shapes configured to fit within in-seat compartments, galley carts, and other aircraft monuments.

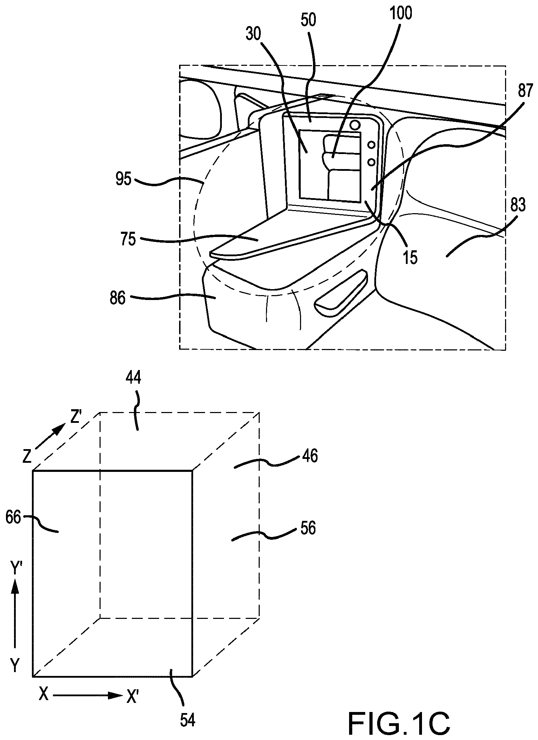

FIG. 1C illustrates a configuration of the in-seat mini-bar module 100 in an arm rest section of a passenger seating module 95 in accordance with various embodiments. In FIG. 1C, the in-seat mini-bar module 100 is positioned in the passenger seating module 95 above an arm rest 85, 86 (or passenger seat divider) with a frontal face 87 positioned adjacent to the passenger seat 83 so the door 15 of the exterior housing 5 (of FIG. 1A) is easily accessible (within arm reach by a passenger) to perform manually the unlatching of the latching mechanism (of FIG. 1A) to open the door 15 and retrieve a cooled refreshment product without assistance, and at a time of choosing. In various embodiments, a tray 75 may be positioned or attached in the front of the in-seat mini-bar module 100 for convenient placement of the cooled refreshment product.

In various embodiments, the in-seat mini-bar module 100 is configured with power systems available in the seating module of the aircraft. For example, this can include low voltage DC power supplies and AC power supplies that are available for passenger's mobile devices and for on-screen monitors integrated in the seating module. The in-seat mini-bar module 100, as an example, has an internal AC/DC converter, or a DC/DC regulator to receive power from a 120 volts (60 hertz) AC current or a 12/24 volts DC current from a battery.

In various embodiments, the in-seat mini-bar module 100 includes a compartment 30 configured as a container (e.g., aluminum chill-pan) comprising a conductive material like aluminum that generally composed of five sides (e.g., a top side 44 (Y'-Z', Y'-X'), a bottom side 54 (Y-Z', X-X'), a left side 66 (Y-Y', Z-Z'), a right side 56 (X'-Z', Y-Y'), a back side 46 (Z'-X', Y'-Z').

In various embodiments, the in-seat mini-bar module 100 is an igloo style micro-chiller unit that can comprise a set of thermo-electric elements (e.g., Peltier elements) with a heat sink mounted on a radially concentric set of fins for heat dissipation with a blower mounted onto the top of the compartment. In implementation, the top wall of the compartment 30 is encapsulated by an aluminum plate of approximately 1-2 mm thick. The in-seat mini-bar module 100 in operation enables a cooling of the aluminum plate (via one or more Peltier modules), which cools the interior compartment 30. To provide increased cooling and power performance, the aluminum sheet may be extended and folded down over additional sides of the compartment and if a cosmetic face sheet is used, the cosmetic face sheet is bonded or riveted or otherwise coupled to the aluminum with, for example, an adhesive such as a thermal epoxy. The aluminum plate forms a barrier that prevents or at least lessens (intercepts) the heat entering the cooling compartment before it mixes with the internally distributed air flow or is expelled to the exterior by the channeled distributed air.

In various embodiments, the assembly of the in-seat mini-bar module 100 configured with multiple layers, a distributed channel of cooled air across each side, provides a compact, low-noise, modular, extensible architecture for chilling small spaces in an in-seat monument. In various embodiments, the in-seat mini-bar module 100 is a solid-state unit configured with no moving parts (common in a refrigeration unit) on either the beverage, food, or user (passenger) facing side of the system because the chilling operation is performed by cooling of the aluminum plate. In various embodiments, the only moving part of the assembly that makes up the in-seat mini-bar module 100 is a fan, which is placed behind the monument (container) structure of the exterior housing 5 and is out of view, and not accessible by the user.

In various embodiments, the in-seat mini-bar module 100 is an eco-friendly chilling unit (configured to reduce the emission of ozone-depleting refrigerants into the atmosphere relative to conventional systems) that is a self-contained unit (i.e., the micro-chiller unit) that can be configured with opening of the door 15 in either direction (i.e., clockwise or counterclockwise) dependent on which side of the passenger seat 83 it is positioned, and dividers that conform to the cans, bottles and other refreshments for holding the items securely in the interior cavity of the compartment 30 in response to motion of the aircraft (especially during landing and take-off). The in-seat mini-bar module 100 can be configured to be easily insertable and swappable with a compartment of passenger seating module 95 to enable efficient repair by replacement of the entire module saving maintenance time and aircraft operational downtime.

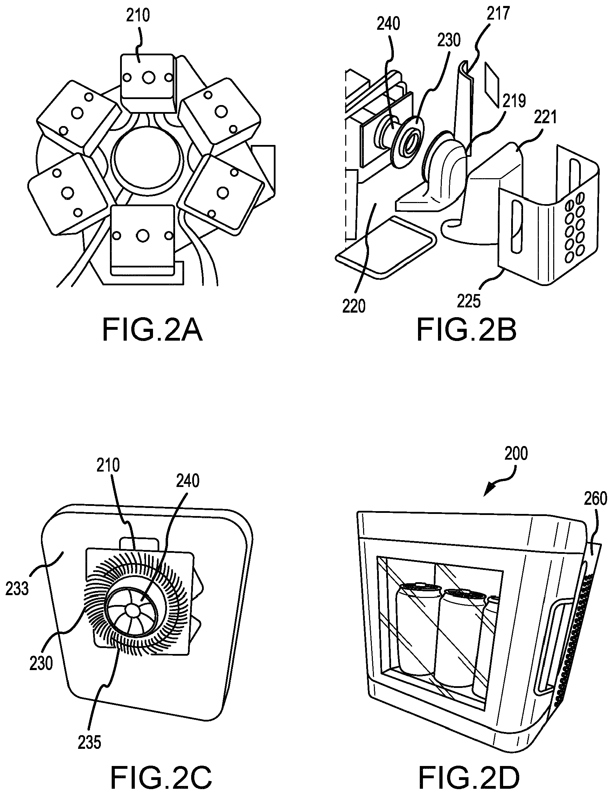

FIGS. 2A, 2B, 2C, and 2D illustrate components of the in-seat mini-bar module that includes the micro-chiller unit of FIGS 1A-C in accordance with various embodiments. FIG. 2A illustrates a set of aluminum spacers 210 which can be formed with standardized machining. The spacers are generally composed of a metal alloy (e.g., aluminum and alloys thereof) in a block form with high thermal conductivity for transferring changes in temperature to the desired space, container, or chill-pan to be cooled. The spacers 210 are selected of sufficient thickness to ensure consistent thermal connection with a set of thermo-electric elements (or Peltier elements) on which the spacers 210 are mounted and are not of an excessive thickness to produce any thermal inertia. The thermo-electric elements dissipate the extracted heat to outside the housing in a forward polarity arrangement, and in a reverse polarity heat the internal cavity. The spacers 210 add a protective layer to stresses and strains that may be experienced by a container wall from the cooling (and heating) effects on which the micro-cooler unit is mounted and are applied by the thermo-electric elements of the unit when current is applied. In various embodiments, the spacers 210 conduct thermal properties such as cooling by the thermo-electric elements at the surface of a wall of the container within the housing.

FIG. 2B illustrates a diagram of a high-level view of the set of components that make up the exterior portion (i.e., non-viewable components) of the assembly of the in-seat mini-bar module. The components shown of the assembly 220 are mounted on the exterior wall of the internal container and may include the radially configured heat-sink 230, blower 240, support brackets 217, duct 219, cover for duct 221, and an exterior venting plate 225 attached to the rear of the container.

FIG. 2C illustrates a diagram of a radially configured heat-sink 230 mounted to the aluminum spacers 210 illustrated in FIG. 2A. The radially configured heat-sink 230 is attached on the outside or hot side of the container (i.e., within the housing) with the aluminum spacers 210 and attached to one side of the container (i.e., one of the 5 sides of the interior cavity). The interior side of the container attached to the micro-chiller unit is the cold side separated by a plate 233 that conducts the thermal cooling (conductive cooling) to the interior of the compartment. Other sides of the container may include an insulative layer to protect against heat seepage.

In various embodiments, the radially configured heat-sink 230 includes parallel oriented fins 235 with a blower 240 in the center. The fins 235 are circularly arranged around the blower 240 to reduce local disturbances in cooling flow and to provide parallel air flow through the fins. The duct of the assembly in FIG. 2B is clamped or otherwise coupled to the mounting plate on which the heat-sink 230 is also mounted to act as a conduit for the airflow to the heat-sink 230. The fins 235 provide heat dissipation for heat transfer (away from the container) from the cooling airflow. The radially configured heat-sink 230 can use a low voltage DC power source. In various embodiments, if the micro-chiller unit is configured in an in-seat housing, a power source (typically a DC power source) that is already available or connected to the aircraft seat can power the radially configured heat-sink 230, and the other thermo-electric elements used. Because of the absence of refrigerant or supplied liquid coolant, the micro-chiller unit can be mounted with flexibility with any orientation including horizontally or at an angle without concern for liquid (such as refrigerant, water, or oil) circulation or interference from external refrigerator connections or condensation hoses.

FIG. 2D is a diagram of the assembly of FIGS. 2A-C configured in a rear assembly of a single-sided chiller unit with an in-seat mini-bar module in accordance with various embodiments. The components described in FIGS. 2A-C are assembled and fitted in the rear assembly 260 mounted on the back of the in-seat mini bar module (attaching to the frame consisting of the assembly 200 of the front facing door connected to the exterior housing casing) in an unobstructive manner without significant protrusion to extend the depth of the unit given the limited space in the seating module.

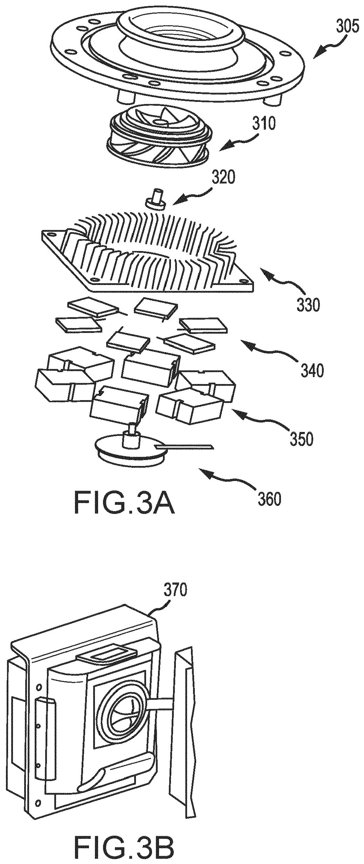

FIGS. 3A and 3B illustrate perspectives of the components that make up the assembly of the micro-chiller unit of the in-seat mini-bar module attached to the rear of the in-seat mini-bar module in accordance with various embodiments. In FIG. 3A, there is shown a diagram of the set of components that make up the core of the micro-chiller unit in the in-seat mini-bar module that include the cover 305, the blower 310, the motor adapter 320, the (radially configured) heat sink 330, the set of thermo-electrics (TE) (or Peltier elements) 340, the set of aluminum spacers (thermally conductive material) 350, and the motor 360 typically a low type profile motor to include in the limited enclosure space in the seating module. In FIG. 3B, there is shown a diagram of a compact assembled module 370 of the set of individual components illustrated in FIG. 3A that can be affixed to an inside wall of the in-seat mini-bar module that allows to thermal cooling of a rear plate of the in-seat mini-bar module and for reduced depth and protrusion in the limited space of the compartment in the seating module that the in-seat mini-bar module is inserted.

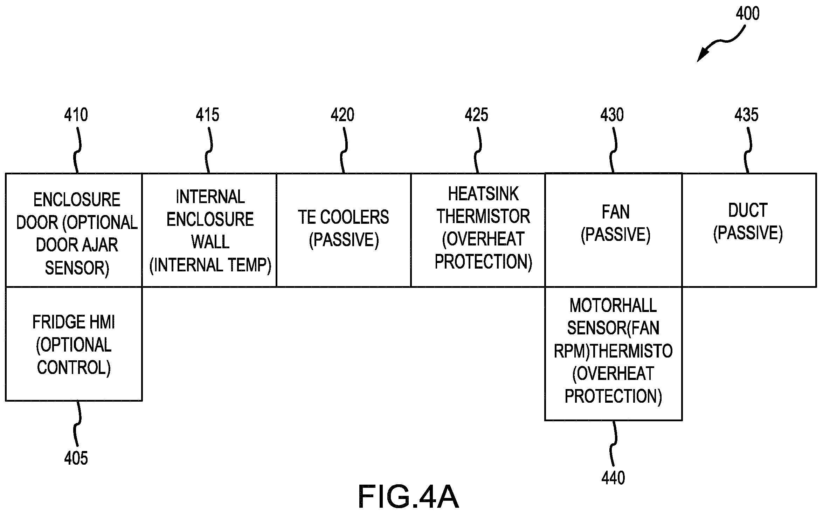

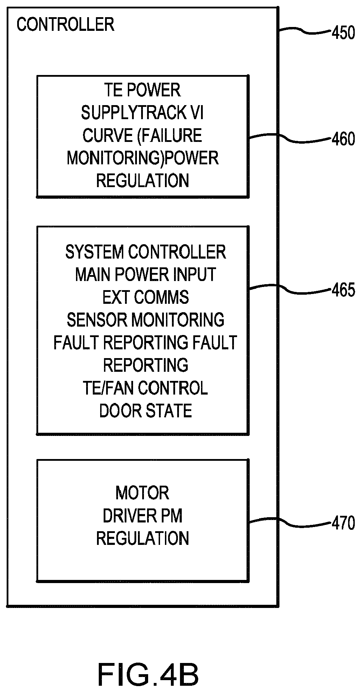

FIGS. 4A and 4B illustrate diagrams of a set of sensors and a controller of the micro-chiller unit of FIGS 1A-C, in accordance with various embodiments. In FIG. 4A, there is illustrated diagrams of a plurality of sensors 400 used to regulate the setpoint in operation of the micro-chiller unit. The plurality of sensors 400 provides a sensor network for enabling advanced control and Prognostics and health management (PHM) monitoring of the micro-chiller unit during chilling operation. In various embodiments, the plurality of sensors 400 includes one or more sensors for monitoring the temperature, for monitoring faults in components, for monitoring power usage of the motor, and for monitoring power to the micro-chiller unit.

In various embodiments, the plurality of sensors 400 may comprise one or more sensors to perform the aforementioned functions: a door sensor 410 that can notify whether the door is ajar, has not been closed after a certain period, or is improperly latched; an operational sensor 405 for different types of human machine interfaces (HMIs) that include interfaces for power monitoring, for humidity and temperature monitoring and for other monitoring functions; a thermistor 415 to sense the internal temperature of the container in the enclosure or within an interior wall of the enclosure; a thermistor associated with the thermo-electric elements (i.e., Thermo-electric (TE) cooler sensor 420) to sense the cooling temperature (i.e., the passive cool air effect) during the system operation; a thermistor 425 configured with the radially configured heat-sink to sense temperatures associated with the heat-sink operation and to prevent overheating of the heat-sink and other elements (i.e., overheat protection); a sensor 430 associated with the fan or blower operations (e.g., a passive sensor) to monitor fan/blower operations; a sensor 435 within the duct to monitor and sense airflow; and a thermistor 440 configured with the motor for overheat protection and to monitor the fan operations (i.e., RPMs of the fan).

In FIG. 4B there is illustrated a diagram of a controller 450 for temperature control capable of performing measurements, calculations, and the control operations for the prognostic and health monitoring activities of the micro-chiller unit in accordance with various embodiments. In FIG. 4B, the controller 450 is configured to control the thermo-electric elements and other components in a Peltier controller (TEC). In implementations, the controller 450 can enable (1) operations of the micro-chiller unit to maintain a temperature setpoint; (2) operations of the micro-chiller unit for safety and to ensure proper shutdown of the unit in the event of a component failure (3) operations of the micro-chiller unit to improve efficient power usage based on sensed energy related data; and (4) operations of providing improved analytics for crew and flight engineering analysis including generating enhanced PHM and other diagnostic information that may result in improvements in the unit's reliability and prevention of mechanical breakdowns.

In various embodiments, the controller 450 may include a set of separate internal modules that serve functionalities such as a thermo-electric supply module 460 for power regulation and failure monitoring. Also, a system controller module 465 for monitoring the main power input, for sensor monitoring, for fault monitoring, for enabling thermoelectric element and fan control, and for enabling door state status monitoring. A motor drive controller module 470 may also be included for monitoring and controlling the motor, fan, and/or blower operations, and for regulating the RPMs of the motor drive. In various embodiments, the controller 450 may enable a variable "A" type control for a maximum power function and variable "B" type control for a set point function. In various embodiments, in a case of a maximum power control, an algorithm can be implemented that weighs power use to the thermo-electric elements with the fan operating mode for the conductive cooling process. In various implementations, the algorithm for an optimized operation of the components with sensed data can be expressed: Max Power "Best" Thermo-electric Element (TE) and fan operating mode [TE current, Fan RPM] = f (Internal T, Ambient T, Ambient Pressure (P), Ambient Relative Humidity (RH)).

In this example, the "Best" operation of unit is a mode of a higher level of performance efficiency (considering various ambient temperatures, pressures, and humidity) when compared with the operational parameters (ex. Power consumption) of normal operative mode. The unit can be configured to draw power from the aircraft and/or the seat/galley central power controller (e.g., turn off cooler while seat actuators on). For the temperature setpoint control, the controller may be manually set by multiple different quantitative (numeric) input selections which can be manually set by a passenger or the crew as desired.

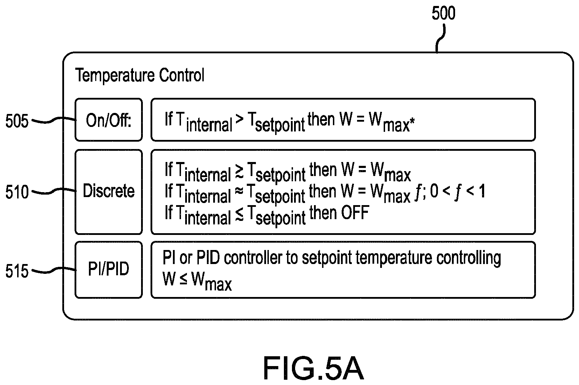

FIG. 5A illustrates an example algorithm of controller operations in a plurality of modes based on the internal temperature of the micro-chiller unit, in accordance with various embodiments. In FIG. 5A, a plurality of temperature control modes 500 of the controller (of FIG. 4B) using a temperature control algorithm is shown and includes an ON/OFF mode 505 if the internal temperature of the interior cavity of the micro-chiller unit is greater than the setpoint temperature. Here, upon actuation, the power to the unit is switched on, and the power is set at a maximum level. Next, in a discrete mode 510, if the internal temperature of the interior cavity is approximately or close to the set point temperature (the desired temperature), then the power setting is set to a function between zero and one (i.e., 0 < f < 1) of the maximum level (i.e., some percentage of the maximum power load to chill the interior cavity). In a control loop mode 515, the controller is set to an automated setting via a proportional-integral-derivative (PID) control loop to adjust power towards the set point temperature in an optimized or anticipatory control to reach or keep internal temperature near or at the setpoint temperature as the unit is operated.

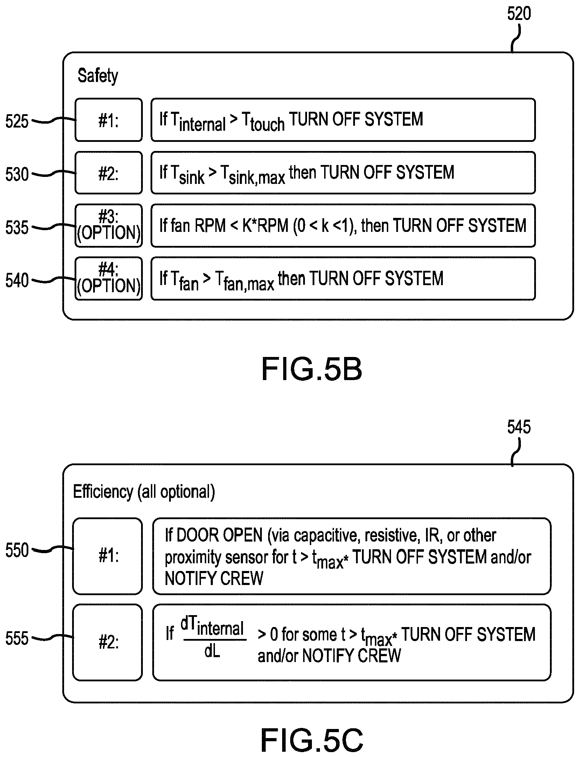

FIG. 5B illustrates a diagram of a plurality of cases of operation of the controller for chilling the interior cavity of the micro-chiller unit, in accordance with various embodiments. In FIG. 5B, in a plurality of safety checks 520 for operation, the controller implements an algorithm that checks 525 if the internal temperature of the interior cavity is greater than a touch temperature (e.g., operational touch) to switch off the unit to prevent a heat related touch injury. The check operation 530, if the heat sink temperature is greater than a maximum rating temperature for the component, then the unit is switched off (i.e., overheating protection). A check procedure 535, if the fan is operating at a rate that is less than a certain threshold of an amount of RPM for the cooling system, then the unit or system is switched off. A check 540, if the fan temperature exceeds a maximum set for the unit operation, then the system is switched off.

FIG. 5C illustrates a plurality of cases of operation of the controller for efficient operation of the micro-chiller unit, in accordance with various embodiments. In FIG. 5C, an efficiency set of requirements 545 is configured for controller operations of the micro-chiller unit. At 550, in a first case, if the door of the unit is detected to be open, or another proximity sensor of the sensor network detects temperatures above a temperature threshold maximum of the operating micro-chiller unit, then the system is switched OFF, and/or a notification is generated of the temperature condition and/or unit being turned off. At 555, if the internal temperature is heading towards a maximum (threshold) temperature, for example, the unit may be appearing to overheat, then the unit or system is switched OFF to prevent the unit from likely entering an overheating state, and/or a notification generated about the imminent overheating condition.

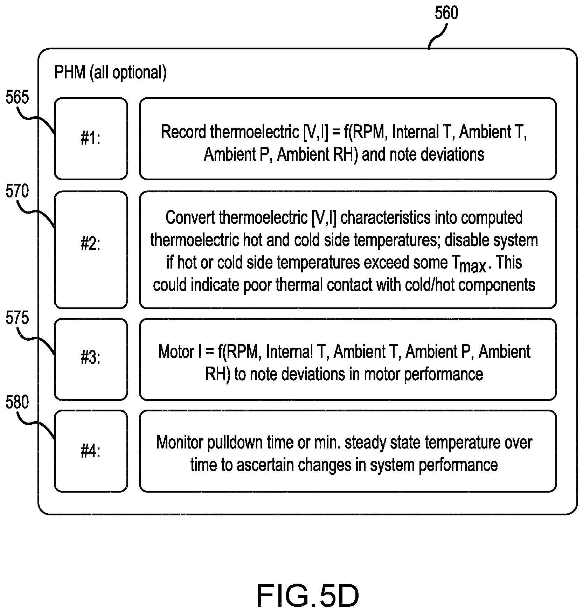

FIG. 5D illustrates a plurality of cases of the Prognostics and Health Management (PHM) processes configured with the controller of the micro-chiller unit, in accordance with various embodiments. In FIG. 5D, a plurality of optional cases 560 for the PHM processes of the controller are illustrated. In a first case 565, voltages and current flow to the thermo-electric elements of the micro-chiller unit are recorded by the controller and compared to a functional analysis of the operating unit based on a profile associated with the fan/motor RPMs, internal and ambient temperatures (T), ambient pressure (P), and ambient relative humidity (RH). In a second case, the voltages and current characteristic of the thermo-electric elements is converted into computed values of the temperatures such as a cold temperature (or hot temperature) of the interior cavity of the unit, and if the temperatures exceed a maximum threshold temperature, which may indicate poor thermal conduct with cold/hot components, a message or other notification is generated. In a third case 575, if the current to the motor related to a function of the RPM, internal and ambient temperatures is outside a norm, then the deviations in motor performance are recorded by the controller and/or a notification is generated. Finally, at 580, the controller determines changes over time such as the pull-down temperature changed times or incremental steady-state temperature changes that occur, to report about the health prognostics and health management (i.e., provide analytics about the current operating state of the device and probable future performance and/or maintenance that may be required).

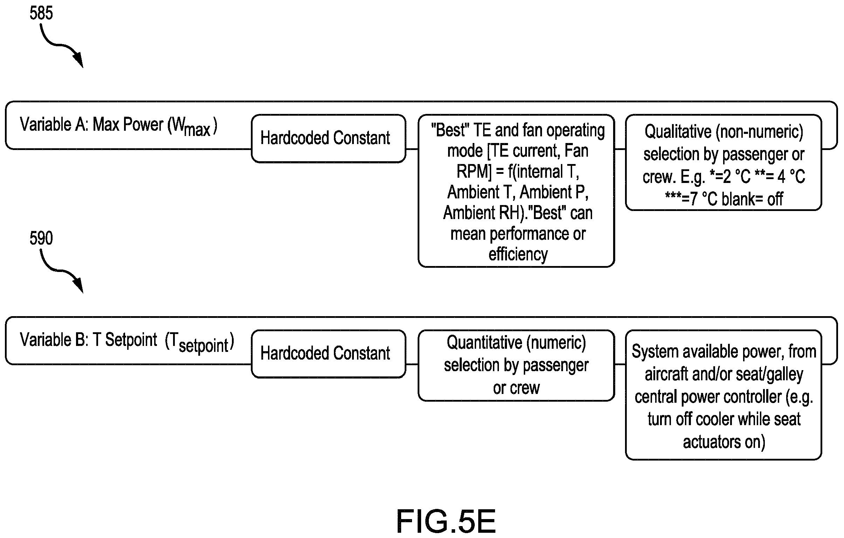

FIG. 5E illustrates a diagram related to configuring of settings for an available power and set point temperature for the controller operations for the micro-chiller unit in accordance with various embodiments. In FIG. 5E, in 585, a framework to configure a power setting for a variable amount of maximum power for use by the controller in the micro-chiller unit operation is shown. In FIG. 5E, in 585, several quantities are factored into the maximum power calculation for the controller and include a hard coded constant in the unit with other factors related to a best operating mode and power delivered to the unit. The best operating mode parameters for operating of the thermo-electric elements and the fan are based on a measure of the current drawn by the thermo-electric elements with the corresponding fan's operating RPM, and these parameters are balanced to a function of the system's internal and ambient temperatures, ambient pressure, and ambient relative humidity. The unit's power drawn or delivered from the aircraft and/or seat/galley central power controller is factored in to computing the maximum power setting for the unit.

In FIG. 5E, in 590, the framework for the variable set-point temperature setting of the controller is shown and is based on a set of parameters that includes a hardcoded constant, a qualitative set of inputted selections, and a computation of a qualitative (non-numeric) selection (e.g., inputs *=2 Celsius, **=4 Celsius ...).

In embodiments, the dimensions of a micro-chiller unit configured for an in-seat mini-bar module are approximately 10.75 inches (27.3 cm) height, 13.25 inches (33.65 cm) width, and 12.5 inches (31.75 cm) in depth. The module is approximately 12.1 lbs. (5.5 kgs) with 10% of the weight constituting the micro-chiller unit. The pull-down time is approximately 31 minutes to reach a temperature of 4 degrees Celsius with an appropriate power level beneficial to maintain the temperature of approximately 21.8 watts and an outlet air temperature of less than 30 degrees Celsius.

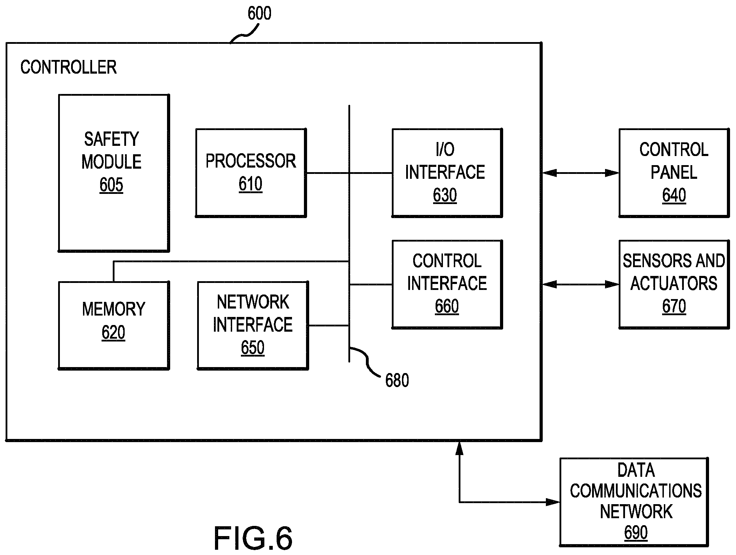

FIG. 6 illustrates a diagram of an architecture of a controller, which monitors and controls the temperature and operation in the dynamic chilled micro-chiller unit in accordance with various embodiments. The controller 600 may include control button for touch actuation of various modes (e.g., ON/OFF, discrete, and automated settings) of operation, to adjust settings, for example, temperature, voltage, and fan speed of the thermo-electric cooling elements. The controller 600 may control an amount of power delivered to the thermo-electric elements or may have automated setting preset based on various operating parameters. This operation may be performed using a pulse-width modulation (PWM) technique. For example, a high current output of 12Vdc, 24 A at 25 degrees Celsius may be provided to the thermo-electric elements according to a PWM signal or other variable current control can be implemented via a PID controller.

In various embodiments, a safety control module 605 for temperature and operational protection may also be included in the controller 600. The safety control module 605 may be configured to implement several safety checks such as ensuring the internal temperature does not exceed a maximum touch temperature, the heat-sink does not operate beyond a maximum operating temperature, and the fan operates within certain limits and temperature. If one or more of the safety checks are violated, the controller 600 may be configured to shut-down the unit (cease operation for a period), switch of certain components, reduce operational activities or power drawn, or maintain a steady-state mode to bring the unit to a more normal operational status.

In various embodiments, the controller 600 may supplement or replace a temperature controller configured in the unit. The controller 600 may be installed on the dynamic micro-chiller unit for a mini-bar or the integrated entertainment equipment. The controller 600 may be coupled with a control panel 640 via an I/O interface 630. The controller 600 may receive input commands from a user via the control panel 640, such as turning the dynamic micro-chiller unit used as a mini-bar on or off, selecting an operation mode, translating the compartment (interior cavity) into an opened or stowed position, and setting a desired temperature of the set point for the mini-bar. The controller 600 may output information to the user regarding an operational status (e.g., diagnostic mode, activation of a defrost cycle, shut-off due to over-temperature conditions of the movable compartment and/or components of the dynamic micro-chiller unit, etc.) of the dynamic chilled mini-bar using a display of the control panel 640. The control panel may be installed on or remotely from embodiments of the micro-chiller unit of the chilled mini-bar and integrated entertainment equipment with which the controller 600 may be coupled.

In various embodiments, the controller 600 may include a processor 610 that performs computations according to program instructions, a memory 620 that stores the computing instructions and other data used or generated by the processor 610, and a network interface 650 that includes data communications circuitry for interfacing to a data communications network 690 such as Ethernet, Galley Data Bus (GAN), or Controller Area Network (CAN). The processor 610 may include a microprocessor, a Field Programmable Gate Array, an Application Specific Integrated Circuit, or a custom Very Large-Scale Integrated circuit chip, or other electronic circuitry that performs a control function. The processor 610 may also include a state machine. The controller 600 may also include one or more electronic circuits and printed circuit boards. The processor 610, memory 620, and network interface 650 may be coupled with one another using one or more data buses 680. The controller 600 may communicate with and control various sensors and actuators 670 of the micro-chiller unit via a control interface 660.

The controller 600 may be controlled by or communicate with a centralized computing system, such as one onboard an aircraft. The controller 600 may implement a compliant ARINC logical communication interface on a compliant ARINC physical interface. The controller 600 may provide network monitoring, power control, remote operation, failure monitoring, and data transfer functions. The controller 600 may provide additional communications using an RS-232 communications interface and/or an infrared data port, such as communications with a personal computer (PC) or a personal digital assistant (PDA). Such additional communications may include real-time monitoring of operations for performance and diagnostic of components of the micro-chiller unit, long-term data retrieval and recording for monitoring the health of the unit, and control system software upgrades.

In various embodiments, the micro-chiller unit may maintain a temperature inside the compartment according to a user-selectable option among several preprogrammed preset temperatures, or according to a specific user-input preset temperature. For example, a beverage chiller mode may maintain the temperature inside the compartment at a user-selectable temperature of about 9 degrees centigrade (about 48.2-degree Fahrenheit) (C), 12 degrees C. (53.6 degree Fahrenheit), or 16 degrees C. (60.8 degree Fahrenheit) In a refrigerator mode, the temperature inside the compartment may be maintained at a user-selectable temperature of about 4 degrees C. (about 39.2 degree Fahrenheit) or 7 degrees C. (44.6 degree Fahrenheit).

The micro-chiller unit chilled may be controlled by an electronic control system associated with the controller 600. The memory 620 of the controller 600 may store a program for performing an optimized method of cooling executable by the processor 610. The method of controlling the micro-chiller unit performed by the electronic control system may include a feedback control system that may automatically maintain a prescribed temperature in the compartment using sensor data, such as temperature, to control the thermo-electric elements.

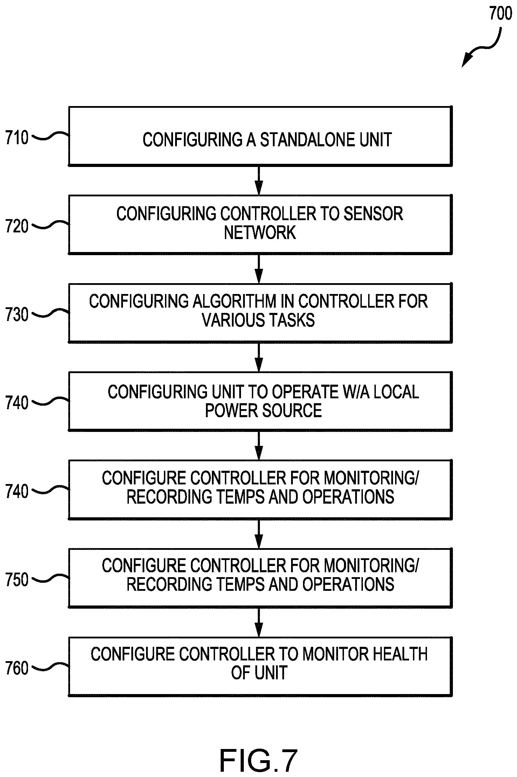

FIG. 7 illustrates a flow diagram for configuring a control assembly of the controller and components of a micro-chiller unit of the aircraft in accordance with various embodiments. The method 700 for ease of description is described with forming of the controller, the heat-sink, sensors and thermo-electric assembly, and container within the exterior housing to configure a chilled mini-bar in an in-seat module. However, the description is not limited to assembly of the referred to components but can include other components and parts put together to build the in-seat mini bar module. In various embodiments, at step 710, the in-seat mini-bar module is configured as a stand-alone unit that can be inserted into a compartment of a passenger seating module. At step 720, the micro-chiller unit is assembled with a controller coupled to communicate and receives data from a plurality of sensors monitoring operational activities of components and temperature of parts of the micro-chiller unit.

The plurality of sensors is configured to monitor cooling operations during control of a set of thermo-electric elements in the housing that conductively cools the interior cavity. At step 730, the controller is configured with a set of instructions that applies an algorithmic solution to enable a set of tasks to operate the unit (1) to maintain a temperature setpoint of the unit; (2) to operate the unit safely and shut down the unit in the event of a component failure (3) to operate the unit efficiently with an optimize feedback system for cooling and maintaining a steady-state operation; (4) to notify enhanced PHM and other diagnostic information for improved system reliability. At step 740, the controller is configured to operate with connections to a local power supply configured in an aircraft location in the interior such as at the seat location or in the galley and to adjust the power drawn to conform within limits for safe operation of the unit and selective modes of operation. At step 750, the controller is configured to record a plurality of temperatures, and to convert thermo-electric characteristics into computed hot and cold side temperatures to disable the unit if the hot or cold side temperature exceeds certain limits. Further, the controller may provide notification that the unit is not working properly based on data analysis that can indicate poor thermal contact or conduction with cold and hot components of the unit. At step 760, the controller is configured to monitor the health of the unit by monitoring of pull-down time or operation within steady state temperatures over periods of times, and deviations in performance of the unit and motor.

Benefits, other advantages, and solutions to problems have been described herein with regard to specific embodiments. Furthermore, the connecting lines shown in the various figures contained herein are intended to represent exemplary functional relationships and/or physical couplings between the various elements. It should be noted that many alternative or additional functional relationships or physical connections may be present in a practical system. However, the benefits, advantages, solutions to problems, and any elements that may cause any benefit, advantage, or solution to occur or become more pronounced are not to be construed as critical, required, or essential features or elements of the disclosure. The scope of the disclosure is accordingly to be limited by nothing other than the appended claims, in which reference to an element in the singular is not intended to mean "one and only one" unless explicitly so stated, but rather "one or more." Moreover, where a phrase similar to "at least one of A, B, or C" is used in the claims, it is intended that the phrase be interpreted to mean that A alone may be present in an embodiment, B alone may be present in an embodiment, C alone may be present in an embodiment, or that any combination of the elements A, B and C may be present in a single embodiment; for example, A and B, A and C, B and C, or A and B and C. Different cross-hatching is used throughout the figures to denote different parts but not necessarily to denote the same or different materials.

Systems, methods, and apparatus are provided herein. In the detailed description herein, references to "one embodiment," "an embodiment," "various embodiments," etc., indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described. After reading the description, it will be apparent to one skilled in the relevant art(s) how to implement the disclosure in alternative embodiments.

Numbers, percentages, or other values stated herein are intended to include that value, and also other values that are about or approximately equal to the stated value, as would be appreciated by one of ordinary skill in the art encompassed by various embodiments of the present disclosure. A stated value should therefore be interpreted broadly enough to encompass values that are at least close enough to the stated value to perform a desired function or achieve a desired result. The stated values include at least the variation to be expected in a suitable industrial process, and may include values that are within 10%, within 5%, within 1%, within 0.1%, or within 0.01% of a stated value. Additionally, the terms "substantially," "about" or "approximately" as used herein represent an amount close to the stated amount that still performs a desired function or achieves a desired result. For example, the term "substantially," "about" or "approximately" may refer to an amount that is within 10% of, within 5% of, within 1% of, within 0.1% of, and within 0.01% of a stated amount or value.

Furthermore, no element, component, or method step in the present disclosure is intended to be dedicated to the public regardless of whether the element, component, or method step is explicitly recited in the claims. No claim element herein is to be construed under the provisions of 35 U.S.C. 312(f) unless the element is expressly recited using the phrase "means for." As used herein, the terms "comprises," "comprising," or any other variation thereof, are intended to cover a non-exclusive inclusion, such that a process, method, article, or apparatus that comprises a list of elements does not include only those elements but may include other elements not expressly listed or inherent to such process, method, article, or apparatus.

Finally, it should be understood that any of the above-described concepts can be used alone or in combination with any or all of the other above-described concepts. Although various embodiments have been disclosed and described, one of ordinary skill in this art would recognize that certain modifications would come within the scope of this disclosure. Accordingly, the description is not intended to be exhaustive or to limit the principles described or illustrated herein to any precise form. Many modifications and variations are possible in light of the above teaching.

## Claims

1. A control assembly comprising:
a controller; and
a plurality of sensors configured within a micro-chiller unit and coupled to the controller wherein the controller is configured to receive sensed data from at least one sensor of the plurality of sensors comprising at least temperature data of an interior cavity disposed in the micro-chiller unit;
wherein, in response to receiving the at least temperature data, the controller is configured to adjust an amount of power to the micro-chiller unit in accordance with a maximum level of power from a supply locally available in an aircraft for the micro-chiller unit;
wherein the amount of power is further adjusted in accordance with a selective mode of operation of the micro-chiller unit for supplying current to a set of components of the micro-chiller unit comprising at least a set of thermo-electric elements to cool the interior cavity of the micro-chiller unit to a set-point temperature.

2. The control assembly of claim 1, wherein the controller is configured to adjust a level of current supplied to the set of thermo-electric elements for conductive cooling of the interior cavity wherein the conductive cooling is associated with a cold side temperature computed from the set of thermo-electric elements based on a conversion of a temperature characteristic associated with performance of the set of thermo-electric elements.

3. The control assembly of claim 1 or 2, wherein in response to the sensed data received by the controller of at least an internal temperature of the interior cavity wherein the internal temperature is determined greater than a threshold temperature configured for touch operation, the controller is configured to cease operation of the micro-chiller unit.

4. The control assembly of claim 1, 2 or 3, wherein the set of components comprises a heat-sink and wherein, in response to the sensed data of temperature associated with operation of the heat-sink that is determined greater than the threshold temperature for operating a heat sink, the controller is configured to cease operation of the micro-chiller unit.

5. The control assembly of any preceding claim, wherein the set of components comprises a fan and wherein in response to the sensed data of operation of a fan motor determined greater than a threshold for operating the fan motor, the controller is configured to cease operation of the micro-chiller unit.

6. The control assembly of any preceding claim, wherein the controller is configured to record sensed data received from the at least one sensor of the plurality of sensor wherein the sensed data comprises one or more temperatures associated with performance of the set of thermo-electric elements disposed in the micro-chiller unit.

7. The control assembly of any preceding claim, wherein the controller is configured to monitor changes associated with operating time of the micro-chiller unit wherein the operating time comprises at least a pull-down time for cooling the interior cavity to the set-point temperature.

8. The control assembly of any preceding claim, wherein the controller is configured to monitor changes in at least regulating of a steady-state temperature during operation of the micro-chiller unit.

9. The control assembly of any preceding claim, wherein the controller is configured to monitor a rate of change of temperature, to determine if an increase of temperature will result in an operating temperature of the micro-chiller unit exceeding a maximum operating temperature configured for the micro-chiller unit, and to generate a notification of prior to the operating temperature exceeding the maximum operating temperature.

10. An apparatus comprising
at least one sensor; and
a controller;
wherein the controller is housed within a micro-chiller unit and configured to generate diagnostic information about operations of the micro-chiller unit from at least sensed data received from the at least one sensor;
wherein in response to receiving sensor data comprising a plurality of temperatures associated with operations of thermo-electric elements of the micro-chiller unit from the at least one sensor, the controller is configured to adjust an amount of power to thermo-electric elements to cause an efficient cooling process based on computations of performance associated with a characteristic of the thermo-electric elements to cool an interior cavity housed within the micro-chiller unit to a set-point temperature.

11. The apparatus of claim 10, wherein the controller is configured to adjust a level of current supplied to the thermo-electric elements for conductive cooling of the interior cavity wherein the conductive cooling is associated with a cold side temperature computed from the thermo-electric elements based on a conversion of the characteristic associated with performance of the thermo-electric elements; and/or
wherein in response to sensed data received by the controller of at least an internal temperature of the interior cavity wherein the internal temperature is determined greater than a threshold temperature configured for a touch operation, the controller is configured to cease operation of the micro-chiller unit.

12. The apparatus of claim 10 or 11:
further comprising a heat-sink housed within the micro-chiller unit and in response to sensed data of temperature associated with operation of the heat-sink that is determined greater than the threshold temperature for operating a heat sink, the controller is configured to cease operation of the micro-chiller unit; and/or
further comprising a fan housed within the micro-chiller unit and in response to sensed data of operation of a fan motor determined greater than a threshold for operating the fan motor, the controller is configured to cease operation of the micro-chiller unit; and/or
wherein the controller is configured to record sensed data received from the at least one sensor wherein the sensed data comprises one or more temperatures associated with performance of thermo-electric elements disposed in the micro-chiller unit.

13. The apparatus of claim 10, 11 or 12;
wherein the controller is configured to monitor changes associated with operating time of the micro-chiller unit wherein the operating time comprises at least a pull-down time for cooling the interior cavity to the set-point temperature; and/or
wherein the controller is configured to monitor changes in at least regulating of a steady-state temperature during operation of the micro-chiller unit; and/or
wherein the controller is configured to monitor a rate of change of temperature, to determine if an increase of temperature will result in an operating temperature of the micro-chiller unit exceeding a maximum operating temperature configured for the micro-chiller unit, and to generate a notification of prior to the operating temperature exceeding the maximum threshold operating temperature.

14. A method to manufacture of a controller apparatus comprising:
constructing a micro-chiller unit with a housing to conform to a monument of an aircraft seating module;
disposing the micro-chiller unit with a set of thermo-electric elements in the housing for conductive cooling of an interior cavity wherein the micro-chiller unit is mounted on a conductive rear plate that forms a wall of the interior cavity;
disposing a controller within the housing and coupled to a plurality of sensors wherein the controller is configured to receive sensed data from at least one sensor of the plurality of sensors comprising at least temperature data of the interior cavity;
wherein in response to receiving the at least temperature data, the controller is configured to adjust an amount of power to the micro-chiller unit in accordance with a maximum level of power from a supply locally available in an aircraft;
wherein the amount of power is further adjusted in accordance with a selective mode of operation of the micro-chiller unit for supplying current to at least the set of thermo-electric elements for the conductive cooling of the interior cavity of the micro-chiller unit to a set-point temperature.

15. The method to manufacture of the controller apparatus of claim 14 wherein the controller is configured to adjust a level of current supplied to the set of thermo-electric elements for conductive cooling of the interior cavity wherein the conductive cooling is associated with a cold side temperature computed from the set of thermo-electric elements based on a conversion of a temperature characteristic associated with cooling performance of the set of thermo-electric elements.
